# EUROPÄISCHE PATENTSCHRIFT

(11) **EP 0 600 250 B1**
(45) Veröffentlichungstag und Bekanntmachung des Hinweises auf die Patenterteilung: **29.01.1997**
(21) Anmeldenummer: 93117812.3
(22) Anmeldetag: 03.11.1993
(51) Int. Cl.: B23K 26/14

(54) **Verfahren zum Schweissen von Werkstücken mittels eines Laserstrahles und Laserschweissdüse**
Procedure of welding work pieces by a laser beam and laser welding nozzle
Procédé pour le soudage de pièces d'oeuvre par un rayon laser et buse de soudage à laser

(30) Priorität: 30.11.1992 DE 4240189
(43) Veröffentlichungstag der Anmeldung: 08.06.1994
(73) Patentinhaber: Linde Aktiengesellschaft, 65189 Wiesbaden (DE)
(72) Erfinder: Herrmann, Johann, D-85716 Unterschleissheim (DE)
(74) Vertreter: Kasseckert, Rainer

(56) Entgegenhaltungen:
- DE-A- 3 926 781
- DE-A- 3 935 009
- GB-A- 2 064 399
- US-A- 4 467 171
- PATENT ABSTRACTS OF JAPAN vol. 11, no. 269 (M-621) 2. September 1987 & JP-A-62 072 495 (SUMITOMO ELECTRIC IND LTD) 3. April 1987

## Beschreibung

Die Erfindung betrifft ein Verfahren zum Schweißen von Werkstücken mittels eines fokussierten Laserstrahles, zumindest eines Hilfsgasstrahles und gegebenenfalls eines Arbeitsgasstrahles, wobei der Laserstrahl, das Hilfsgas und gegebenenfalls das Arbeitsgas durch eine Laserschweißdüse auf die Werkstücke geführt werden. Die Erfindung betrifft ferner eine Laserschweißdüse zum Schweißen von Werkstücken mittels eines fokussierten Laserstrahles, zumindest eines Hilfsgasstrahles und gegebenenfalls eines Arbeitsgasstrahles mit einem zentral angeordneten Düsenkanal für den Laserstrahl und gegebenenfalls das Arbeitsgas und mehreren, um den zentralen Düsenkanal symmetrisch, aber nicht koaxial angeordneten Zusatzkanälen für das Hilfsgas.

Wie in vielen Bereichen der Werkstückbearbeitung werden konventionelle Verfahren auch beim Schweißen durch Verfahren unter Einsatz von Lasern ersetzt.

Aus der GB-A-2064 399 ist ein Verfahren und eine Vorrichtung zum Schmelz- und Brennschneiden, Schweißen, Sublimierschneiden, Bohren, Markieren sowie zur Feinbearbeitung von Werkstoffen mit einem fokussierten Laserstrahl, einem inerten oder reaktiven Gas (je nach Anwendung) und einem Kühlgas bekannt. Laserstrahl und Gas werden durch eine Düse auf den Werkstoff geleitet.

Aus der deutschen Offenlegungsschrift DE 39 26 781 A1 ist bekannt, beim Laserschweißen unter Zugabe eines Schutz- oder Arbeitsgases insbesondere bei Verschweißen von beschichteten Werkstücken mit einer Beschichtung mit einem unter dem Schmelzpunkt des Werkstückmaterials liegenden Verdampfungspunkt ein Hilfsgas zur Entgasung der verdampfenden Beschichtung zu verwenden. Der Laserstrahl trifft dabei senkrecht auf die Bearbeitungsstelle, während das Arbeitsgas durch eine separate Düse schräg gegen die Bearbeitungsstelle geführt wird. Das Hilfsgas wird durch zumindest eine flachwinklig zu den Werkstücken gerichtete Düse auf die Bearbeitungsstelle geführt. Dieses Verfahren bedingt einen erheblichen apparativen Aufwand und macht eine komplizierte und genaue Regelung erforderlich, da Laserstrahlung, Arbeitsgas und Hilfsgas jeweils einzeln durch baulich getrennte Kanäle bzw. Düsen geführt werden. Außerdem läßt es nur eine Bearbeitung in einer Richtung zu. Für eine nicht geradlinig verlaufende Schweißung müssen die Werkstücke und/oder Teile der Bearbeitungsanlage, insbesondere die Düsen für Arbeits- und Hilfsgas, gedreht werden.

In einigen Fällen werden beim Schweißen spezielle Überhöhungen der Schweißnaht gewünscht. Derartige Nahtüberhöhungen sind durch Laserschweißungen jedoch bislang nicht gezielt und im erforderlichen Maße kontrolliert und gleichmäßig herstellbar.

Der Erfindung liegt daher die Aufgabe zugrunde, ein Verfahren der eingangs genannten Art und eine Laserschweißdüse aufzuzeigen, die unabhängig von der Bearbeitungsrichtung und von der Materialart des Werkstückes eine hohe Bearbeitungsqualität beim Schweißen sicherstellen und die auch ein Schweißen mit kontrollierter Nahtüberhöhung ermöglichen.

Diese Aufgabe wird erfindungsgemäß dadurch gelöst, daß das Hilfsgas den Laserstrahl umgibt und daß an der Schweißstelle ein Unterdruck erzeugt wird.

Die Laserschweißdüse kann aus einem Stück gefertigt sein oder aus zu einer Laserschweißdüse zusammengebauten Einzelteilen bestehen.

Als Arbeitsgase können dabei alle für das Schweißen bekannte Arbeits- oder Schutzgase eingesetzt werden. Als Hilfsgase eigenen sich inerte oder reaktive Gase wie beispielsweise Luft, Sauerstoff, Stickstoff, Argon, Helium, CO₂ und/oder Gemische daraus.

Es sind ohne weiteres auch lasergestützte Schweißverfahren ohne den Einsatz eines Arbeitsgases denkbar. Diese sind insbesondere dann sinnvoll, wenn im Laserschweißkopf keine Fokusierlinse(n) oder andere vor auftreffenden Werkstückteilchen durch das Arbeitsgas zu schützenden optischen Elemente für den Laserstrahl in Reichweite der von der Bearbeitungsßstelle weggeschleuderten Werkstückteilchen eingebaut sind. Dies ist in der Regel beim Einsatz von Umlenkspiegeln im oder über dem Bearbeitungskopf einer Laserschweißanlage der Fall.

Die Laserschweißdüse ist im Bearbeitungskopf einer Laserschweißanlage auswechselbar eingebaut. Daher sind bestehende Anlagen leicht auf das erfindungsgemäße Verfahren nachrüstbar. Das erfindungsgemäße Laserschweißverfahren zeichnet sich insbesondere durch eine richtungsunabhängige Bearbeitung aus. Damit werden schnelle und häufige Richtungswechsel beim Laserschweißen ermöglicht.

Vorteilhafterweise werden Laserstrahl und gegebenenfalls das Arbeitsgas durch einen zentral in der Laserschweißdüse angeordneten Düsenkanal und das Hilfsgas durch einen oder mehrere Zusatzkanäle der Laserschweißdüse geführt. Das Arbeitsgas trifft damit bei zur Laserschweißdüsenspitze parallel liegenden Werkstücken senkrecht auf diese auf, während das Hilfsgas unter einem bestimmten Winkel auf die Werkstücke strömt.

Besondere Vorteile sind im erfindungsgemäßen Verfahren dadurch erzielbar, daß das Hilfsgas mit einer größeren Austrittsgeschwindigkeit aus der Laserschweißdüse strömt als das Arbeitsgas. Damit wird direkt an der Schweißstelle ein Unterdruck erzeugt, der ein Ausgasen des Schweißbades unterstützt. Beim Schweißen mit hohen Laserleistungen bildet sich Plasma, das die Laserstrahlung teilweise absorbiert. Dadurch kann der Schweißprozess merklich beeinträchtigt oder gar unterbrochen werden. Der mit dem Hilfsgas erzeugte Unterdruck verdünnt das Plasma und führt zu einer Verringerung der Absorption der Laserstrahlung. Eine hohe Qualität der Schweißung wird damit gesichert. Außerdem ist durch die Vorgabe der Ausströmgeschwindigkeiten von Arbeitsgas und Hilfsgas der Unterdruck und damit eine gewollte Nahtüberhöhung steuerbar.

In Ausgestaltung des erfindungsgemäßen Verfahrens wird das Hilfsgas, vorzugsweise in mehreren Hilfsgasstrahlen, auf das Werkstück, nicht aber auf die Bearbeitungsstelle des Werkstückes geleitet. Die Hilfsgasstrahlen reißen Gasatome und Gasmoleküle mit, so daß in dem Raum mitten unter der Laserschweißdüse und über den Werkstücken ein Unterdruck erzeugt wird. Damit kann zusätzlich die Entstehung einer Nahtüberhöhung unterstützt werden.

Bevorzugt weist das Hilfsgas neben einer Geschwindigkeitskomponente in Richtung der Mittelachse von Laserstrahl und gegebenenfalls Arbeitsgasstrahl eine Geschwindigkeitskomponente auf, die, senkrecht hierzu, tangential zur zentrischen Öffnung in der Laserschweißdüse für Laserstrahl und gegebenenfalls Arbeitsgas gerichtet ist. Auf diese Weise wird um die Schweißstelle eine Drallströmung erzeugt.

Vorteilhafterweise wird das Hilfsgas unter einem Winkel zwischen 10° und 80°, vorzugsweise zwischen 40° und 80°, besonders bevorzugt zwischen 50° und 70°, bezüglich der Richtung der Mittelachse von Laserstrahl und gegebenenfalls des Arbeitsgasstrahles gegen die Werkstückoberfläche geleitet.

In Weiterbildung des erfindungsgemäßen Verfahrens wird das Hilfsgas über einen Ringkanal in Zusatzkanäle eingespeist, bevor das Hilfsgas über diese Zusatzkanäle auf das Werkstück geleitet wird.

In der die Erfindung betreffenden Laserschweißdüse sind erfindungsgemäß die Zusatzkanäle für das Hilfsgas so angeordnet, daß das Hilfsgas den Laserstrahl umgibt und an der Schweißstelle ein Unterdruck erzeugt wird.

Die Zusatzkanäle sind erfindungsgemäß bezüglich der Mittelachse der Laserschweißdüse für Laserstrahl und gegebenenfalls für das Arbeitsgas rotationssymmetrisch, aber nicht achssymmetrisch bezüglich einer beliebigen Fläche durch die Mittelachse der Laserschweißdüse angeordnet. Durch diese Anordnung der Zusatzkanäle der Laserschweißdüse kann, unabhängig von der Schweißrichtung, aus dem Schweißbad oder der Dampfkapillare ausgasendes Material sofort seitlich weggeblasen werden. Gleichzeitig wird ein Unterdruck über der Bearbeitungsstelle erzeugt.

Die Form des zentralen Düsenkanals kann durch eingebaute Einsätze bestimmt und durch Austausch dieser Einsätze leicht verändert werden. Der zentrale Düsenkanal und/oder die Zusatzkanäle können in der Laserschweißdüse austauschbar eingebaut sind.

Vorteilhafterweise führt in Aufsicht in Richtung der Mittelachse der Laserschweißdüse die Verlängerung der Seitenwand eines Zusatzkanals tangential auf die zentrale Austrittsöffnung für den Laserstrahl und gegebenenfalls für das Arbeitsgas. Diese Anordnung ermöglicht beim Einsatz eines Arbeitsgases eine ungestörte Arbeitsgaszufuhr an die Bearbeitungsstelle, gewährleistet aber gleichzeitig durch das Hilfsgas eine von der Bearbeitungsstelle weggerichtete Strömung und die Erzeugung eines merklichen Unterdruckes an der Bearbeitungsstelle.

Bevorzugt weisen die Zusatzkanäle eine konstante Querschnittsfläche auf. Wegen ihrer einfachen Herstellung werden die Zusatzkanäle bevorzugt durch Bohrungen mit kreis- oder rechteckförmigem Querschnitt hergestellt.

In Ausgestaltung der Laserschweißdüse ist erfindungsgemäß symmetrisch um den zentralen Düsenkanal für den Laserstrahl und gegebenenfalls für das Arbeitsgas ein Ringkanal für das Hilfsgas mit Zuleitung angeordnet, von dem die Zusatzkanäle zur Laserschweißdüsenspitze führen. Vorteilhafterweise enthält die Laserschweißdüse zumindest zwei, vorzugsweise vier bis acht, Zusatzkanäle. Erfindungsgemäß sind die Zusatzkanäle unter einem Winkel zwischen 10° und 80°, vorzugsweise zwischen 40° und 80°, besonders bevorzugt zwischen 50° und 70°, bezüglich der Mittelachse der Laserschweißdüse angeordnet.

Die Erfindung sei im folgenden anhand eines in zwei Figuren dargestellten Ausführungsbeispieles näher erläutert.

Hierbei wird eine erfindungsgemäße Laserschweißdüse :
- in Fig. 1: in Aufsicht und
- in Fig. 2: in Seitenansicht gezeigt.

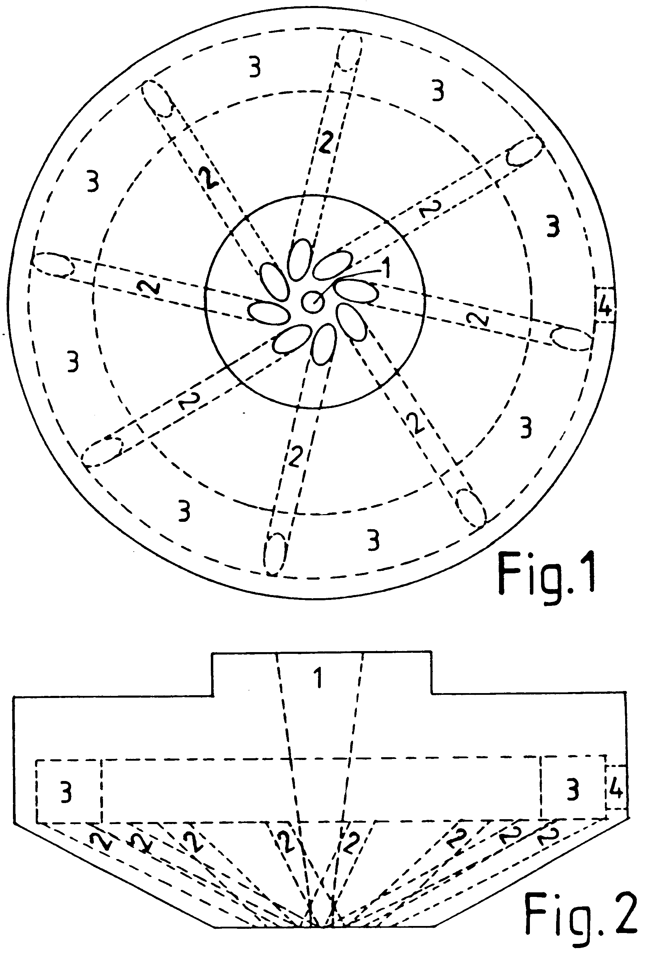

Die in Fig. 1 in Aufsicht und in Fig. 2 in Seitenansicht dargestellte Laserschweißdüse weist einen zentral angeordneten Düsenkanal 1 auf, durch den der fokussierte Laserstrahl und das Arbeitsgas gegen die Schweißstelle der Werkstücke geführt werden. Der Laserstrahl wird durch eine nicht dargestellte Fokussierlinse gebündelt. Der Fokus der Laserstrahlung liegt dabei in der Regel unterhalb der Werkstückoberfläche (Bearbeitungsstelle). Er kann aber auch, insbesondere bei leistungsstarker Laserstrahlung, auf einer Werkstückoberfläche oder oberhalb der Werkstücke liegen. Der Arbeitsgasstrahl wird direkt auf die Schweißstelle geleitet.

Neben dem zentral angeordneten Düsenkanal 1 enthält die Laserschweißdüse acht rotationssymmetrisch bezüglich der Mittelachse des zentralen Düsenkanals 1 angeordnete Zusatzkanäle 2. Wie in der Aufsicht in Fig. 1 deutlich erkennbar ist, sind diese Zusatzkanäle 2 in die Laserschweißdüse so eingebaut, daß eine gedachte Verlängerung jeweils der linken Seitenwand der Zusatzkanäle 2 tangential auf den Rand der Austrittsöffnung des zentralen Düsenkanals 1 führen würde. Der Neigungswinkel der Zusatzkanäle 2 gegenüber der Mittelachse des zentralen Düsenkanals 1 beträgt im dargestellten Ausführungsbeispiel 63°.

Das Hilfsgas wird über eine Zuleitung 4 und einen Ringkanal 3 in die Zusatzkanäle 2 eingespeist.

## Patentansprüche

1. Verfahren zum Schweißen von Werkstücken mittels eines fokussierten Laserstrahles (1), zumindest eines Hilfsgasstrahles (2) und gegebenenfalls eines Arbeitsgasstrahles (1), wobei der Laserstrahl, das Hilfsgas und gegebenenfalls das Arbeitsgas durch eine Laserschweißdüse auf die Werkstücke geführt werden, **dadurch gekennzeichnet**, daß das Hilfsgas den Laserstrahl umgibt und daß an der Schweißstelle ein Unterdruck erzeugt wird.

2. Verfahren nach Anspruch 1, dadurch gekennzeichnet, daß Laserstrahl und gegebenenfalls Arbeitsgas durch einen zentral in der Laserschweißdüse angeordneten Düsenkanal (1) und das Hilfsgas durch einen oder mehrere Zusatzkanäle (2) der Laserschweißdüse geführt werden.

3. Verfahren nach einem der Ansprüche 1 oder 2, dadurch gekennzeichnet, daß das Hilfsgas mit einer größeren Austrittsgeschwindigkeit aus der Laserschweißdüse strömt als das Arbeitsgas.

4. Verfahren nach einem der Ansprüche 1 bis 3, dadurch gekennzeichnet, daß das Hilfsgas nicht auf die Schweißstelle geleitet wird.

5. Verfahren nach einem der Ansprüche 1 bis 4, dadurch gekennzeichnet, daß das Hilfsgas neben einer Geschwindigkeitskomponente in Richtung der Mittelachse von Laserstrahl und gegebenenfalls des Arbeitsgasstrahles eine Geschwindigkeitskomponente aufweist, die, senkrecht hierzu, tangential zur zentrischen Öffnung (1) in der Laserschweißdüse für Laserstrahl und gegebenenfalls für das Arbeitsgas gerichtet ist.

6. Verfahren nach Anspruch 1 bis 5, dadurch gekennzeichnet, daß das Hilfsgas unter einem Winkel zwischen 10° und 80°, vorzugsweise 40° bis 80°, besonders bevorzugt 50° bis 70°, bezüglich der Richtung der Mittelachse von Laserstrahl und gegebenenfalls des Arbeitsgasstrahles gegen die Werkstückoberflächen geleitet wird.

7. Verfahren nach einem der Ansprüche 1 bis 6, dadurch gekennzeichnet, daß das Hilfsgas über einen Ringkanal (3) in die Zusatzkanäle (2) eingespeist wird.

8. Laserschweißdüse zum Schweißen von Werkstücken mittels eines fokussierten Laserstrahles, zumindest eines Hilfsgasstrahles und gegebenenfalls eines Arbeitsgasstrahles, wobei die Laserschweißdüse mit einem zentral angeordneten Düsenkanal (1) für den Laserstrahl und gegebenenfalls für das Arbeitsgas und mit mehreren, um den zentralen Düsenkanal (1) symmetrisch, aber nicht koaxial angeordneten Zusatzkanälen (2) für das Hilfsgas ausgestattet ist, dadurch gekennzeichnet, daß die Zusatzkanäle (2) so angeordnet sind, daß das Hilfsgas den Laserstrahl umgibt und an der Schweißstelle ein Unterdruck erzeugt werden kann.

9. Laserschweißdüse nach Anspruche 8, dadurch gekennzeichnet, daß die Zusatzkanäle (2) bezüglich der Mittelachse des zentralen Düsenkanales (1) für Laserstrahl und gegebenenfalls für das Arbeitsgas rotationssymmetrisch, aber nicht achssymmetrisch bezüglich einer beliebigen Fläche durch die Mittelachse der Laserschweißdüse angeordnet sind.

10. Laserschweißdüse nach einem der Ansprüche 8 oder 9, dadurch gekennzeichnet, daß in Aufsicht in Richtung der Mittelachse der Laserschweißdüse eine gedachte Verlängerung der Seitenwand eines Zusatzkanales (2) tangential auf die Berandung der Austrittsöffnung des zentralen Düsenkanals (1) für Laserstrahl und gegebenenfalls für das Arbeitsgas führt.

11. Laserschweißdüse nach einem der Ansprüche 8 bis 10, dadurch gekennzeichnet, daß die Zusatzkanäle (2) eine über ihre Länge konstante Querschnittsfläche aufweisen.

12. Laserschweißdüse nach einem der Ansprüche 8 bis 11, dadurch gekennzeichnet, daß symmetrisch um den zentralen Düsenkanal (1) ein Ringkanal (3) für das Hilfsgas mit Zuleitung (4) angeordnet ist, von dem die Zusatzkanäle (2) zur Laserschweißdüsenspitze führen.

13. Laserschweißdüse nach einem der Ansprüche 8 bis 12, dadurch gekennzeichnet, daß die Zusatzkanäle (2) unter einem Winkel zwischen 10° und 80°, vorzugsweise zwischen 40° und 80°, besonders bevorzugt zwischen 50° und 70°, bezüglich der Mittelachse der Laserschweißdüse angeordnet sind.

14. Laserschweißdüse nach einem der Ansprüche 8 bis 13, dadurch gekennzeichnet, daß die Laserschweißdüse vier bis acht Zusatzkanäle (2) enthält.

15. Laserschweißdüse nach einem der Ansprüche 8 bis 14, dadurch gekennzeichnet, daß die Form des zentralen Düsenkanals (1) bestimmende Einsätze in den zentralen Düsenkanal eingebaut sind.

16. Laserschweißdüse nach einem der Ansprüche 8 bis 15, dadurch gekennzeichnet, daß der zentrale Düsenkanal (1) und/oder die Zusatzkanäle (2) in der Laserschweißdüse austauschbar eingebaut sind.

## Claims

1. Method of welding workpieces by means of a focused laser beam (1), at least one auxiliary-gas jet (2) and if need be a working-gas jet (1), the laser beam, the auxiliary gas and if need be the working gas being directed through a laser welding nozzle onto the workpieces, characterized in that the auxiliary gas surrounds the laser beam and in that a vacuum is produced at the welding point.

2. Method according to Claim 1, characterized in that the laser beam and if need be the working gas are directed through a nozzle passage (1) arranged centrally in the laser welding nozzle and the auxiliary gas is directed through one or more additional passages (2) of the laser welding nozzle.

3. Method according to either of Claims 1 or 2, characterized in that the auxiliary gas flows out of the laser welding nozzle with a greater discharge velocity than the working gas.

4. Method according to one of Claims 1 to 3, characterized in that the auxiliary gas is not directed onto the welding point.

5. Method according to one of Claims 1 to 4, characterized in that the auxiliary gas has, in addition to a velocity component in the direction of the centre axis of the laser beam and if need be of the working-gas jet, a velocity component which, perpendicularly hereto, is directed tangentially to the central opening (1) in the laser welding nozzle for the laser beam and if need be for the working gas.

6. Method according to Claims 1 to 5, characterized in that the auxiliary gas is directed towards the workpiece surfaces at an angle between 10° and 80°, preferably 40° to 80°, especially preferred 50° to 70°, relative to the direction of the centre axis of the laser beam and if need be of the working-gas jet.

7. Method according to one of Claims 1 to 6, characterized in that the auxiliary gas is fed into the additional passages (2) via an annular passage (3).

8. Laser welding nozzle for welding workpieces by means of a focused laser beam, at least one auxiliary-gas jet and if need be a working-gas jet, the laser welding nozzle being equipped with a centrally arranged nozzle passage (1) for the laser beam and if need be for the working gas and with a plurality of additional passages (2) for the auxiliary gas which are arranged symmetrically about the central nozzle passage (1) but not coaxially, characterized in that the additional passages (2) are arranged in such a way that the auxiliary gas surrounds the laser beam and a vacuum is produced at the welding point.

9. Laser welding nozzle according to Claim 8, characterized in that the additional passages (2), relative to the centre axis of the central nozzle passage (1) for the laser beam and if need be for the working gas, are arranged with rotational symmetry, but not axial symmetry, relative to any area through the centre axis of the laser welding nozzle.

10. Laser welding nozzle according to either of Claims 8 or 9, characterized in that, in plan view in the direction of the centre axis of the laser welding nozzle, an imaginary extension of the side wall of an additional passage (2) leads tangentially to the boundary of the discharge opening of the central nozzle passage (1) for the laser beam and if need be for the working gas.

11. Laser welding nozzle according to one of Claims 8 to 10, characterized in that the additional passages (2) have a constant cross-sectional area over their length.

12. Laser welding nozzle according to one of Claims 8 to 11, characterized in that an annular passage (3) for the auxiliary gas and having a feed line (4) is arranged symmetrically around the central nozzle passage (1), from which annular passage (3) the additional passages (2) lead to the tip of the laser welding nozzle.

13. Laser welding nozzle according to one of Claims 8 to 12, characterized in that the additional passages (2) are arranged at an angle between 10° and 80°, preferably between 40° and 80°, especially preferred between 50° and 70°, relative to the centre axis of the laser welding nozzle.

14. Laser welding nozzle according to one of Claims 8 to 13, characterized in that the laser welding nozzle contains four to eight additional passages (2).

15. Laser welding nozzle according to one of Claims 8 to 14, characterized in that inserts determining the form of the central nozzle passage (1) are fitted into the central nozzle passage.

16. Laser welding nozzle according to one of Claims 8 to 15, characterized in that the central nozzle passage (1) and/or the additional passages (2) are interchangeably fitted in the laser welding nozzle.

## Revendications

1. Procédé pour le soudage de pièces d'oeuvre au moyen d'un rayon laser focalisé (1), d'au moins un jet de gaz auxiliaire (2) et éventuellement d'un jet de gaz de travail (1), dans lequel le rayon laser, le gaz auxiliaire et éventuellement le gaz de travail sont conduits vers la pièce d'oeuvre à travers une buse de soudage à laser, caractérisé en ce que le gaz auxiliaire entoure le rayon laser et en ce que l'on produit une dépression à l'endroit de la soudure.

2. Procédé suivant la revendication 1, caractérisé en ce que le rayon laser et éventuellement le gaz de travail sont conduits à travers un canal (1) disposé au centre dans la buse de soudage à laser et le gaz auxiliaire est conduit à travers un ou plusieurs canaux additionnels (2) de la buse de soudage à laser.

3. Procédé suivant l'une quelconque des revendications 1 ou 2, caractérisé en ce que le gaz auxiliaire sort de la buse de soudage à laser avec une plus grande vitesse de sortie que le gaz de travail.

4. Procédé suivant l'une quelconque des revendications 1 à 3, caractérisé en ce que le gaz auxiliaire n'est pas mené sur l'endroit de la soudure.

5. Procédé suivant l'une quelconque des revendications 1 à 4, caractérisé en ce qu'en plus d'une composante de vitesse orientée dans la direction de l'axe central du rayon laser et éventuellement du jet de gaz de travail, le gaz auxiliaire présente une composante de vitesse qui, perpendiculairement à celle-ci, est orientée tangentiellement à l'ouverture centrale (1) dans la buse de soudage à laser pour le rayon laser et éventuellement le gaz de travail.

6. Procédé suivant une revendication 1 à 5, caractérisé en ce que le gaz auxiliaire est mené contre les surfaces de la pièce d'oeuvre sous un angle compris entre 10° et 80°, de préférence de 40° à 80°, avec une préférence particulière de 50° à 70°, par rapport à la direction de l'axe central du rayon laser et éventuellement du jet de gaz de travail.

7. Procédé suivant l'une quelconque des revendications 1 à 6, caractérisé en ce que le gaz auxiliaire est introduit dans les canaux additionnels (2) par l'intermédiaire d'un canal annulaire (3).

8. Buse de soudage à laser pour le soudage de pièces d'oeuvre au moyen d'un rayon laser focalisé, d'au moins un jet de gaz auxiliaire et éventuellement d'un jet de gaz de travail, dans laquelle la buse de soudage à laser est équipée d'un canal (1) disposé au centre pour le rayon laser et éventuellement pour le gaz de travail et de plusieurs canaux additionnels (2) pour le gaz auxiliaire, disposés autour du canal central (1) de façon symétrique mais pas coaxiale, caractérisée en ce que les canaux additionnels (2) sont disposés de telle façon que le gaz auxiliaire entoure le rayon laser et qu'une dépression puisse être produite à l'endroit de la soudure.

9. Buse de soudage à laser suivant la revendication 8, caractérisée en ce que les canaux additionnels (2) sont disposés avec une symétrie de révolution par rapport à l'axe central du canal central (1) pour le rayon laser et éventuellement pour le gaz de travail, mais pas en symétrie axiale par rapport à une surface quelconque passant par l'axe central de la buse de soudage à laser.

10. Buse de soudage à laser suivant l'une quelconque des revendications 8 ou 9, caractérisée en ce qu'en regardant dans la direction de l'axe central de la buse de soudage à laser, un prolongement imaginaire de la paroi latérale d'un canal additionnel (2) conduit tangentiellement au bord de l'ouverture de sortie du canal central (1) pour le rayon laser et éventuellement le gaz de travail.

11. Buse de soudage à laser suivant l'une quelconque des revendications 8 à 10, caractérisée en ce que les canaux additionnels (2) présentent une section transversale constante sur leur longueur.

12. Buse de soudage à laser suivant l'une quelconque des revendications 8 à 11, caractérisée en ce qu'autour du canal central (1) est disposé symétriquement un canal annulaire (2) pour le gaz auxiliaire, avec une arrivée (4), à partir duquel les canaux additionnels (2) conduisent à la pointe de la buse de soudage à laser.

13. Buse de soudage à laser suivant l'une quelconque des revendications 8 à 12, caractérisée en ce que les canaux additionnels (2) sont disposés sous un angle compris entre 10° et 80°, de préférence entre 40° et 80°, avec une préférence particulière entre 50° et 70°, par rapport à l'axe central de la buse de soudage à laser.

14. Buse de soudage à laser suivant l'une quelconque des revendications 8 à 13, caractérisée en ce que la buse de soudage à laser contient de quatre à huit canaux additionnels (2).

15. Buse de soudage à laser suivant l'une quelconque des revendications 8 à 14, caractérisée en ce que des pièces déterminant la forme du canal central (1) sont insérées dans le canal central.

16. Buse de soudage à laser suivant l'une quelconque des revendications 8 à 15, caractérisée en ce que le canal central (1) et/ou les canaux additionnels (2) sont montés de façon interchangeable dans la buse de soudage à laser.
